# EUROPEAN PATENT SPECIFICATION

(11) **EP 2 202 628 B1**
(45) Date of publication and mention of the grant of the patent: **12.09.2012**
(21) Application number: 08172930.3
(22) Date of filing: 24.12.2008
(51) Int. Cl.: G06F 3/048

(54) **Methods and systems for managing memory and processing resources for the control of a display screen to fix displayed positions of selected items on the display screen**
Verfahren und Systeme zur Verwaltung von Speicher- und Verarbeitungsressourcen zur Kontrolle eines Anzeigebildschirms, um angezeigte Positionen ausgewählter Elemente auf dem Anzeigebildschirm zu fixieren
Procédés et systèmes de gestion de la mémoire et traitement des ressources pour le contrôle d'un écran d'affichage pour fixer les positions affichées des éléments sélectionnés sur l'écran d'affichage

(43) Date of publication of application: 30.06.2010
(73) Proprietor: Research In Motion Limited, Waterloo, ON N2L 3W8 (CA)
(72) Inventor: Vuong, Thanh Vinh, Waterloo Ontario N2L 3L3 (CA); Lee, John S., Waterloo Ontario N2L 3L3 (CA)
(74) Representative: MERH-IP Matias Erny Reichl Hoffmann

(56) References cited:
- EP-A- 1 909 192
- GB-A- 2 420 197
- JP-A- 2007 172 283
- US-A1- 2006 005 145
- US-A1- 2007 176 922
- US-B1- 6 205 454

## Description

The present specification relates generally to computer implemented methods and systems for managing memory and processing resources for controlling a display screen to fix displayed positions of selected items on a display screen of a hand-held computing device.

People often carry hand-held computing devices such as mobile "smart" phones, hand-held computers, and PDAs on their person to assist in conducting their business and personal duties. Higher capability versions of these devices are invaluable in providing the user with access to appointments, calendars, schedules, send and receive email, address book/contacts lists as well as Internet access through mobile web browsers. Web browsers, for example, typically provide the user with a means of storing and later recalling URLs for important or frequently visited websites in a browser bookmark list. Similarly, email clients typically provide an inbox list of email messages received, often ordered by time/date. Lists such as the browser favorites list and the email inbox list typically grow in length with use and can become problematic. For example, the number of bookmark items on a list may make it cumbersome to locate a desired web browser URL in a web browser bookmarks. Similarly, an important contact such as a major client or important friend may be obscured in a lengthy list, requiring repeated scrolling or paring through the hand-held device's graphical user interface (GUI) to locale the desired contact in a lengthy contacts list, even if the list is ordered alphabetically.

EP 1 909 192 relates to displaying tabular information in a user interface (UI) on a display screen is enhanced by freezing selected non-adjacent columns (rows). Freezing ensures the display of the selected non-adjacent columns (rows) when scrolling to bring other columns (rows) into the table for display. Border rows (columns) may also be frozen when scrolling. A table in a document navigable by moving a focus to scroll the document may be displayed by a UI control configured to automatically display the frozen border rows. (columns). When scrolling a focus in the document at an edge of the display screen to bring the UI control into the display, the UI control aligns a portion of the table with the edge and paints the frozen border row (column). The UI control maintains the display of the border row (column) when scrolling through the table.

JP 2007-172283 relates to providing an improved tree display program. While a tree structure formed of the set of elements in hierarchical relation is developed and a tree is displayed, when desiring to fix a display node group in the state of being displayed on a screen at all times, a node positioned at the highest order of the display node group is set as a fixed node by performing a prescribed operation. The fixed node is displayed by a pinned icon. When a click operation is performed so as to switch a node in an open state to a closed state and display it, the low order nodes of the node are not displayed excluding the fixed node and its low order node.

US 6,205,454 discloses a process for visually organizing multiple information and headings on a computer screen of a Web browser. A single file containing data and integrated headings is translated by a Web browser. Hypertext markup language is used to control the integrated headings determining which headings are scrollable or non-scrollable. Top and bottom headings are non-scrollable. Scrollable middle headings scroll with the data and replace top headings when they reach the top of the screen.

US 2007/0176922-A1 discloses an information display apparatus that includes candidate object display means configured to display selectable candidate objects in a first display layer; and selected object display processing means configured to display a selected object, which is selected by user from the candidate objects, in a second display layer, which is superposed over the first display layer so that when the list display section is scrolled, the selected object moves together with the candidate objects. Therefore, the selected object disappears from the list display section so that the user may not confirm the already selected object.

### GENERAL

An aspect of the specification preferably provides a computer-implemented method controlling hardware components of a computing device of fixing a displayed position of selected items on a display screen of a hand-held computing device as set out in claim 1 and a corresponding device as set out in claim 10.

The stored display position can be indicative of a position in said list.

The stored display position can be indicative of a position on said display screen of said device.

The method can further comprise:
receiving items to be added to said list in at least one over-the-air transmission; and
adding said received items to said list; wherein
selecting a second subset of items from said list, said second subset is identified in said over-the-air transmission.

The method can further comprise scrolling said list such that additional portions of said list are viewable while maintaining each positionally fixed item at its stored display position.

The method can further comprise:
displaying at least a portion of a list having at least one item, said list is a dynamic updated list in which items are dynamically added, deleted or reordered in said list.

The method can further comprise positionally sorting said positionally fixed items in said list such that said positionally fixed items are repositioned to positionally display together as at least one group.

Associating each item in said subset with a pinned icon can comprise choosing a color to render at least a portion of said pinned icon.

When choosing a color to render at least a portion of said pinned icon, said color can selected from a plurality of colors displayed in a cursor tool tip on said display screen.

The method can further comprise positionally sorting said positionally fixed items according to said chosen colors of said pinned icons such that pinned icons sharing the same chosen color positionally display together in a group on said display screen.

In the method, where at least a portion of a list having at least one non-fixed item is displayed on said display screen, said list can be a browser bookmark list and the items can further include at least one browser bookmark, and in relation to the step of associating each item in said subset with a pinned icon, the pinned icon can be a web icon defined in a web page represented by said item. The pinned icon can further include a "glow" surrounding said pinned icon to distinguish said pinned icon from non-pinned icons in said list.

The list can be selected from the group including a web browser bookmark list, an email message list, a multi-media message list, a SMS message list, and a contacts list.

The pinned icon can be an image thumbnail associated with a contact name on said contacts list; and the image thumbnail can further include a "glow" surrounding said image thumbnail to distinguish said pinned icon from non-pinned icons in said list.

Another aspect of the specification provides a system for positionally grouping items on a display screen of a hand-held computing device.

### BRIEF DESCRIPTION OF THE DRAWINGS

The drawings show example embodiments of the invention; however, the disclosure is not limited to the precise arrangement shown in the drawings.

Figure 1 is a schematic representation of a hand-held computing device and a display output therefor;

Figure 2A is a schematic block diagram of depicting components of the hand-held computing device of Figure 1;

Figure 2B is a schematic block diagram of the memory, depicting a portion of the plurality of applications that may be resident in the memory of the hand-held computing device and resident in the flash memory.

Figure 3 is a display screen image of a hand-held computing device illustrating a prior art web browser bookmarks screen;

Figures 4A through 4D present a series of display screen images of a hand-held computing device such as shown in Figure 1;

Figures 5A through 5C present a series of display screen image of a hand-held computing device such as shown in Figure 1;

Figure 6 is a flowchart illustrating a method of fixing the displayed position of selected items;

Figure 7 is a flow chart illustrating a method of receiving fixed items to be added to a list in a data transmission to the wireless device;

Figure 8A is a display screen image of a prior art email message list as displayed by an email message client application running on an electronic hand-held device;

Figures 8B and 8C depict display screen images of an email message list as displayed by an email message client application of a hand-held computing device such as shown in Figure 1; and

Figure 9 is a flowchart illustrating a method of positionally fixing draft messages in a message list.

Figure 10 shows various components from Figure 2 and their state in relation to a specific example utilizing the teachings herein.

Figure 11 shows various components from Figure 2 and their state in relation to a specific example utilizing the teachings herein.

Figure 12 shows various components from Figure 2 and their state in relation to a specific example utilizing the teachings herein.

### DESCRIPTION OF PREFERRED EMBODIMENTS

The discussion will now turn to a detailed description of the present disclosure together with the accompanying drawings. The present disclosure is not limited to the presented details of the method, user interface and applications as illustrated in the accompanying drawings, as the disclosed concepts are clearly capable of other embodiments and of being practiced and realized in various ways by applying the teachings presented herein.

The disclosure herein presents systems and methods of fixing a displayed position of a selected subset of items in a list on a display screen of a hand-held computing device. (A few examples of displayed lists which can managed using the teachings herein include, but are not limited to, contacts/address lists, list of emails, web browser favorites and visited sites history lists.) Other unselected or non-fixed items of the list are free to positionally flow around the selected items whenever the list is updated, or even when the list is scrolled on the display. Typically, important or frequently used items are selected to be positionally fixed so that such items remain persistently in place in the displayed list (in one embodiment) or a fixed position of the display screen (in another embodiment). By fixing the position of items, these items may be later grouped and positioned on the display such that they are readily accessible to the user independent of length of the item list, the display capacity of the display screen or the scroll position of the list in the display of the hand-held device.

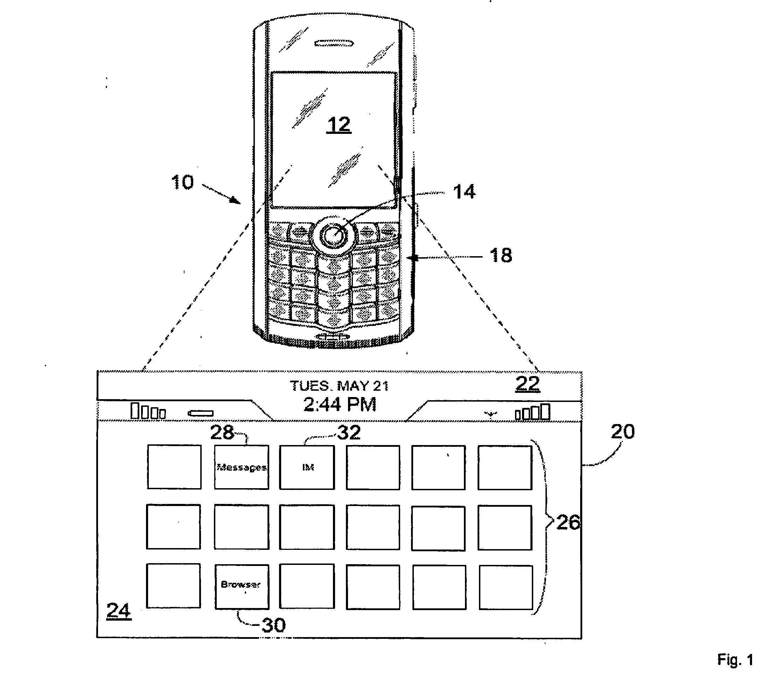

Referring first to Figure 1, a hand-held computing device 10 is shown. The hand-held computing device 10 generally comprises a display 12 and a cursor or view positioning device 14, such as a positioning wheel (not shown) or a trackball (such as one example shown). Other positioning or cursor/view positioning mechanisms may be utilized such as a touch pad, a joystick button, a mouse, a touch screen, a tablet or other positioning device as would be known to one skilled in the art. The hand-held computing device 10 also comprises a keyboard 18. In this example, the keyboard 18 is disposed on the front face of the hand-held computing device 10. The positioning device 14 is disposed above the keyboard 18 on the front face of the hand-held computing device 10. The keyboard 18 is in this example a reduced QWERTY keyboard, but instead a full QWERTY keyboard may instead be employed or any other keyboard type and arrangement as would be known to one skilled in the art.

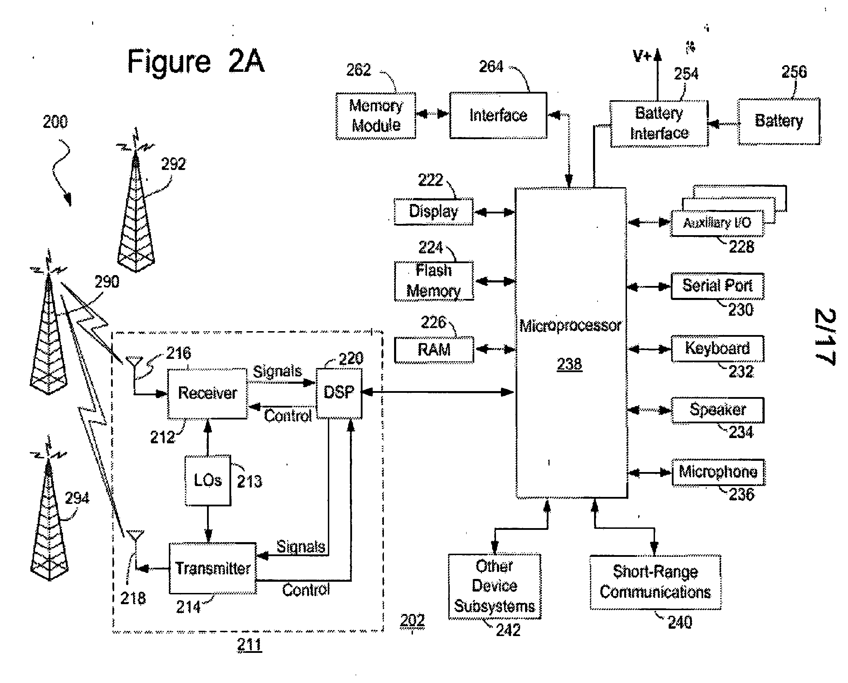

The positioning device 14 may serve as another input member and is rollable (or rotatable or otherwise movable) to provide selection inputs to the processor 238 (see Figure 2A) and can also be pressed in a direction generally toward the housing to provide another selection input to the processor 238 (Figure 2A). The display 12 may include a cursor (not shown) that depicts generally where the next input or selection will be received. The cursor is generally responsive to manipulations of the positioning device.

It will be appreciated that the hand-held computing device 10 shown in Figure 1 is for illustrative purposes only and various types and varieties of other hand-held computing devices are equally applicable to the following examples. Such devices share common characteristics of a relatively small screen size, limited display capabilities (due to screen size and resolution) and limited processing power (relative to desktop computers).

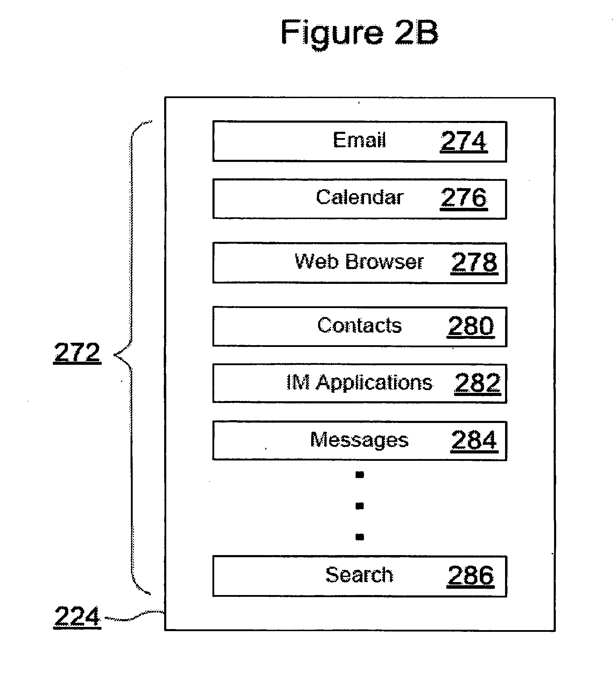

Figure 2A is a detailed block diagram of an exemplary hardware structure hand-held mobile computing device 202 of the present disclosure. The term "hand-held device" will herein refer to the operable components of a hand-held mobile computing device such as device 10 (Figure 1) also shown in component form in 202 (Figure 2). The term "hand-held" is not to be construed in a limiting sense, but rather to convey the portability of the device and as such computing device 202 can also be referred to as a portable computing device. The hand-held device 202 is a two-way communication device having at least voice and advanced data communication capabilities, including the capability to communicate with other computer systems. Depending on the functionality provided by the hand-held device 202, it may be referred to as a cellular telephone with data messaging capabilities, a wireless Internet appliance or smart phone, or a data communication device (with or without telephony capabilities) - e.g. the hand-held computing device 10 shown in Figure 1. The hand-held device 202 may communicate with any one of a plurality of fixed transceiver stations 200 within its geographic coverage area.

Hand-held device 202 typically incorporates a communication subsystem 211 which includes a receiver 212, a transmitter 214, and associated components such as one or more (typically embedded or internal) antenna elements 216 and 218, local oscillators (LOs) 213, and a processing module such as a digital signal processor (DSP) 220. Communication subsystem 211 facilitates wireless radio frequency communication with communication network base stations such as 290, 292 and 294. As will be apparent to those skilled in the field of communications, the particular design of the communication subsystem 211 depends on the communication network in which hand-held device 202 is intended to operate.

Hand-held device 202 may send and receive communication signals over a network after required network registration or activation procedures have been completed. Signals received by antenna 216 through the network are input to receiver 212, which may perform such common receiver functions as signal amplification, frequency down conversion, filtering, channel selection, and the like, and in example shown in Figure 2A, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up-conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access, in a present embodiment, is based on the Global System for Mobile communications (GSM) (or its successors including 3G, 4G or the like), is associated with a subscriber or user of hand-held device 202, and hand-held device 202 implements a Subscriber Identity Module or "SIM" card 262 to be inserted in a SIM interface 264 in order to operate in the network. SIM 262 is one type of a conventional "smart card" used to identify an end user (or subscriber) of the hand-held device 202 and to personalize the device, among other things. By inserting SIM 262 into hand-held device 202, an end user can have access to any and all of his/her subscribed services. SIM 262 generally includes a processor and memory for storing information. Since SIM 262 is coupled to a SIM interface 264, it is coupled to microprocessor 238 through communication lines. In order to identify the subscriber, SIM 262 contains some user parameters such as an International Mobile Subscriber Identity (IMSI). SIM 262 may store additional user information for the hand-held device as well, including datebook (or calendar) information and recent call information.

It should be understood, however, that the SIM card 262 and the selection of a GSM-based device 202 is simply a non-limiting example. Device 202 need not be based on a SIM card paradigm. Device 202 can be based on other core mobile network technologies (e.g. code division multiple access (CDMA)) or can incorporate wireless local area network WLAN technologies (e.g. 802.11 or Bluethooth) or both.

Hand-held device 202 is a battery-powered device so it also includes a battery interface 254 for receiving one or more rechargeable batteries 256. Such a battery 256 provides electrical power to most if not all electrical circuitry in hand-held device 202, and battery interface 254 provides for a mechanical and electrical connection for it. The battery interface 254 is coupled to a regulator (not shown) which provides a regulated voltage (V+) to all of the circuitry.

Hand-held device 202 includes a microprocessor 238 which controls overall operation of hand-held device 202. Communication functions, including at least data and voice communications, are performed through communication subsystem 211. Microprocessor 238 also interacts with additional device subsystems such as a display 222, a flash memory 224 (or other non-volatile storage), a random access memory (RAM) 226 (or more generally, volatile storage), auxiliary input/output subsystems 228, a serial port 230, a keyboard 232, a speaker 234, a microphone 236, a short-range communications subsystem 240, and any other device subsystems generally designated at 242. Some of the subsystems shown in Figure 2A perform communication-related functions, whereas other subsystems may provide "resident" or on-device functions. Notably, some subsystems such as keyboard 232 and display 222, for example, may be used for both communication-related functions, such as entering a text message for transmission over a communication network, and device-resident functions such as a calculator or task list. Operating system software used by microprocessor 238 is stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, executes of software applications on hand-held device 202. A predetermined set of applications which control basic device operations, including at least data and voice communication applications, as well as the inventive functionality of the present disclosure, can be installed on hand-held device 202 during its manufacture. An application that may be loaded onto hand-held device 202 may be a personal information manager (PIM) application, or a group of related applications, having the ability to organize and manage data items relating to user such as, but not limited to, e-mail, calendar events, voice mails, appointments, and task items. Naturally, one or more memory stores are available on hand-held device 202 and SIM 262 to facilitate storage of PIM data items and other information.

The PIM application(s) has the ability to send and receive data items via the wireless network. In the present disclosure, PIM data items are seamlessly integrated, synchronized, and updated via the wireless network, with the hand-held device user's corresponding data items stored and/or associated with a host computer system thereby creating a mirrored host computer on hand-held device 202 with respect to such items. This can be especially advantageous where the host computer system is the hand-held device user's office computer system. Additional applications may also be loaded onto the hand-held device 202 through network, an auxiliary subsystem 228, serial port 230, short-range communications subsystem 240, or any other suitable subsystem 242, and installed by a user in RAM 226 or a non-volatile flash memory 224 for execution by microprocessor 238. Such flexibility in application installation increases the functionality of hand-held device 202 and may provide enhanced on-device functions, communication-related functions, or both. For example, secure communication applications may enable electronic commerce functions and other such financial transactions to be performed using hand-held device 202.

In a data communication mode, a received signal such as a text message, an e-mail message, or web page download will be processed by communication subsystem 211 and provided as input to microprocessor 238. Microprocessor 238 will further process the signal for output to display 222 or alternatively to auxiliary I/O device 228. A user of hand-held device 202 may also compose data items, such as e-mail messages, for example, using keyboard 232 in conjunction with display 222 and possibly auxiliary I/O device 228. Keyboard 232 is a complete alphanumeric keyboard and/or telephone-type keypad. Data from these composed items may be transmitted over a communication network (such as the communications network employing base station 290) through communication subsystem 211.

For voice communications, (and such a communication feature is not required but is typically provided) the overall operation of hand-held device 202 is substantially similar, except that the received signals would be output to speaker 234 and signals for transmission would be generated by microphone 236. Alternative voice or audio I/O subsystems, such as a voice message recording subsystem, may also be implemented on hand-held device 202. Although voice or audio signal output is accomplished primarily through speaker 234, display 222 may also be used to provide an indication of the identity of a calling party, duration of a voice call, or other voice call related information, as some examples.

Serial port 230 in Figure 2A is normally implemented in a personal digital assistant (PDA)-type communication device for which synchronization with a user's desktop computer is a desirable, albeit optional, component. Serial port 230 enables a user to set preferences through an external device or software application and extends the capabilities of hand-held device 202 by providing for information or software downloads to hand-held device 202 other than through a wireless communication network. The alternative download path may, for example, be used to load an encryption key onto hand-held device 202 through a direct and thus reliable and trusted connection to thereby provide secure device communication.

Short-range communications subsystem 240 of Figure 2A is an additional optional component which provides for communication between hand-held device 202 and different systems or devices, which need not necessarily be similar devices. For example, subsystem 240 may include an infrared device and associated circuits and components, or a Bluetooth™ communication module to provide for communication with similarly enabled systems and devices. Bluetooth™ is a registered trademark of Bluetooth SIG, Inc.

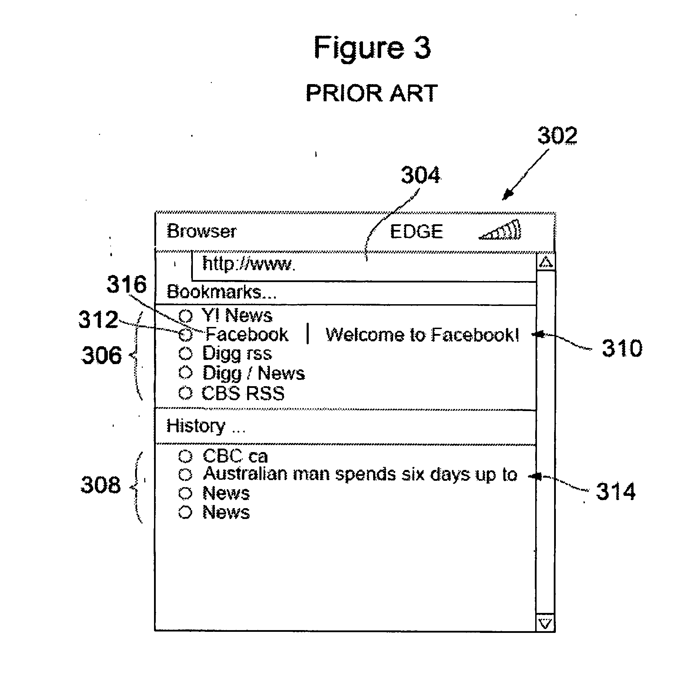

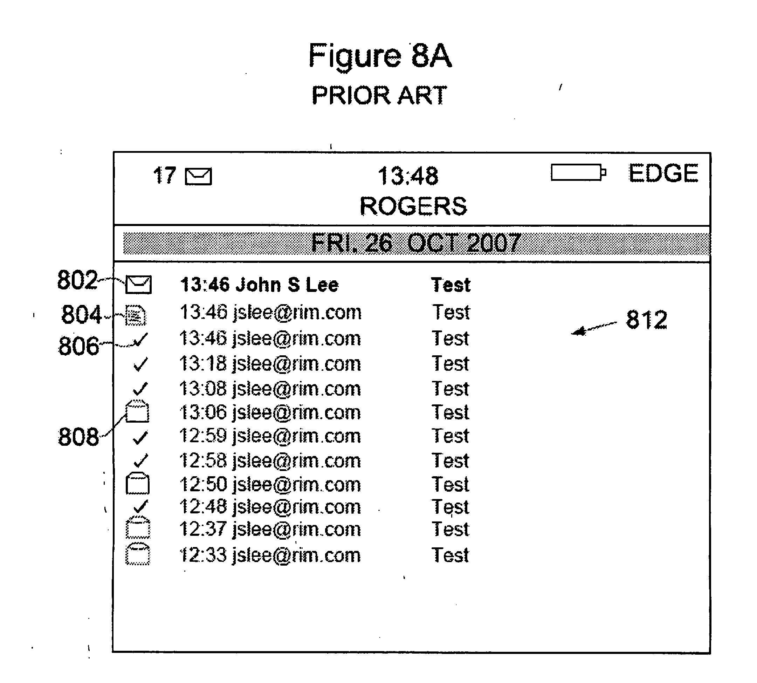

Referring again to Figure 1, the hand-held computing device 10 may display an application screen 20 that includes a status region 22 and an application portion 24 that displays a series of icons 26 for accessing each visible application available for use on the hand-held computing device 10 for providing features to the user. A visible application is generally one that has not been hidden by the user. The series of icons 26 comprises a messages icon 28, a web browser icon 30 and an instant messaging icon 32. Selection of the messages icon 28 opens a messages screen 800 or 812, shown in Figures 8A through 8C, and selection of the web browser icon 30 opens a web browser bookmarks and history screen, such as 302 shown in Figure 3A. One or more of the series of icons 26 may be a folder (not shown) that itself is capable of organizing any number of applications or files therewithin.

As shown in Figure 2B, memory 224 maintains a plurality of applications 272 associated with the series of icons 26 (Figure 1). Applications 272 may be any variety of computer executable application such as, without limitation, software, firmware, and the like. Applications 272 may include, for example, a web browser 278, a contacts application 280 (also referred to commonly as an address book), one or more instant messaging applications 282 such as AOL Instant Messanger™ or Yahoo Messenger™, SMS and/or MMS applications 282, electronic mail (email) 274, calendar program 276, search application 286, etc. The mobile device 10 of the present disclosure is also adapted to enable communication between different ones of the applications, e.g. between messages 284 and contacts 280 such that items stored in the device 10 for use with one application can be searched, filtered and indicators therefore displayed for the user so that a look-up function can be performed directly within the other application without requiring the loading of a sub-menu.

In Figure 1, the "home" screen output is currently active and constitutes the main application for displaying the icons 26 shown. An application, such as web browser application 278 (Figure 2B) having icon 30 may then be initiated (opened or viewed) from the application screen 20 by providing a suitable user input to it. For example, web browser 278 may be initiated (opened or viewed) by rotating positioning device 14 to highlight the web browser icon 30 and then providing a selection input by depressing positioning device 14. In the exemplary embodiment illustrated in Figure 1 the positioning device 14 is a trackball. In other exemplary embodiments, positioning device 14 may also include a scroll wheel, a thumbwheel, a touchpad, a touch screen, a joystick, a roller wheel, a roller ball, and the like.

Figure 3 depicts a prior art hand-held device web browser bookmarks and history screen 302 as an aid to understanding certain features and advantages. The web browser bookmarks and history screen 302 includes a web URL input field 304, a scrollable web page bookmark list 306 as well as a web page history list 308 providing a listing of recently visited web pages. Web pages are identified by web page Uniform Resource Locator (URL) items such as bookmark item 310 or history list item 314. Web page URL items typically include a short text title such as title 316 useful in identifying the web page to which the URL is linked. Any URL item displayed in URL history list 308 or bookmark list 306 such as item 310 may be opened by the web browser application by rotating positioning device 14 (Figure 1) to highlight the bookmark item 310 then providing a selection input by depressing device 14. However, other means may be used to select the desired bookmark item 310 and opening the bookmark item 310 in the web browser application 278 such as, for one illustrative example, providing a tactile input directly on the desired bookmark item 310 through a touch input display screen. Other means may be employed for selecting a bookmark as would be known to those skilled in the art. Web page URL items in the history list 308 as well as bookmark list 306 may include an associated icon such as icon 312. In some cases the icon 312 may be an icon contained in, linked to or otherwise associated with a web page to which the web page URL item is linked.

Due to the limited size of the display screen in a hand-held computing device, bookmark list 306 as well as URL history list 308 are capable of displaying only a limited number of web page URL items 310, 314 at any time. When new URL items are added to bookmark list 306, currently displayed bookmark items may shift in bookmark list 306 causing frequently used or important bookmark items to be undesirably removed from the displayed portion of the bookmark list 306. The order of bookmark items in bookmark list 306 is dynamic. The user generally has no control over which bookmarks and in what order the bookmarks are displayed. It would be advantageous if the hand-held computing device user was permitted to fix the position of a one or more important bookmark items in bookmark list 306 so that when new bookmark items are added to bookmark list 306 the fixed items would remain displayed in their fixed position and would not be shifted or removed from the display screen.

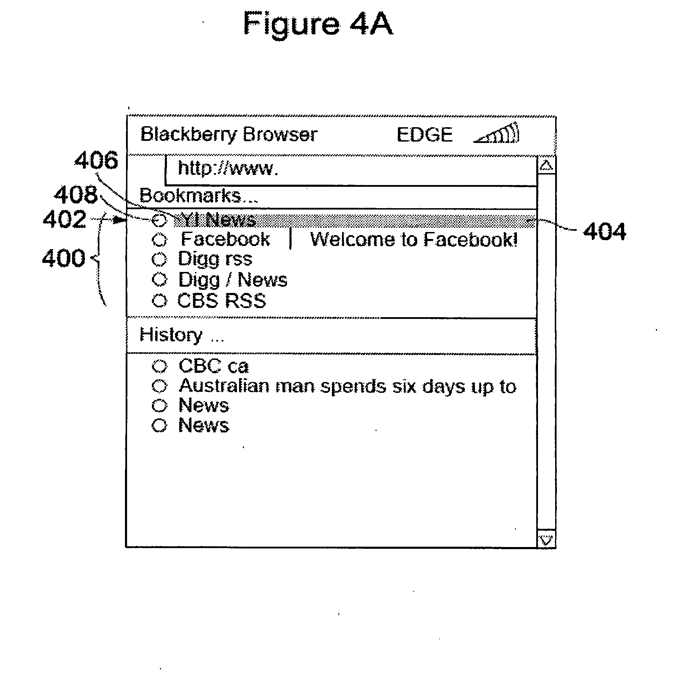

Figures 4A through 4D present a series of display screen images illustrating one exemplary implementations of an embodiment of the method and system for fixing the displayed positions of selected items on a display screen.

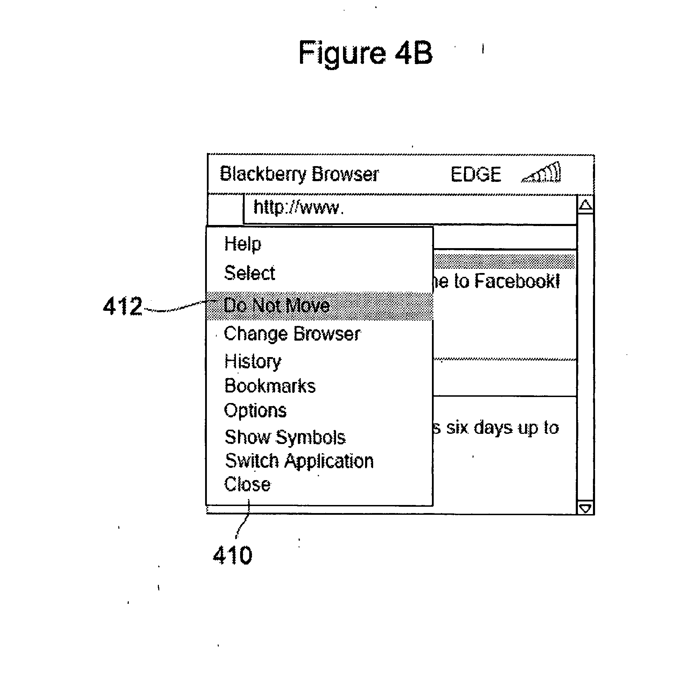

Turning now to Figure 4A. In this illustrated embodiment of the invention, important or frequently used web page bookmark items such as web browser bookmark item 402 can be fixed in position so that it remains statically positioned (relative to either the display or the screen position) and therefore does not reposition or shift in position as new bookmark items are added to or removed from bookmark list 400. Bookmark list 400 having a plurality of bookmark items, such as bookmark item 402, is displayed on the display screen 12 (Figure 1) of the hand-held computing device such as device 10 (Figure 1). To fix the position of the bookmark item 402, the bookmark item 402 is first selected or picked using any selection means as would be known to one skilled in the art, such as (for one example) by rotating positioning device 14 (Figure 1) as discussed earlier to highlight 404 the bookmark item 402 then providing a selection input by depressing device 14 (Figure 1). Bookmark item 402 includes an identifying title/text portion 406 and an associated icon 408 that displays together with and proximate to title/text portion 406. Bookmark item 402 is illustrated as currently selected as is shown by selection box 404 overlaying the title/text portion 406. To fix the position of the bookmark item 402, after the bookmark item is selected as discussed above, a user input is initiated to cause browser menu 410 (Figure 4B) to be displayed. The initiated user input may include activating a specifically assigned keyboard (18 Figure 1, 232 Figure 2A) key or a series of keys on the keyboard, or may include initiating tactile input to a touch sensitive display screen to cause the menu 410 to be displayed. In the exemplary embodiment illustrated in Figure 4B, the menu 410 includes the "Do Not Move" menu item 412. The "Do Not Move" menu item 412 may be selected on the menu 410 by any conventional means, such as by operation of the rotating positioning device 14 (Figure 1) to highlight the "Do Not Move" menu item 412, then causing a selection input to occur such as by depressing the rotating positioning device 14 (Figure 1) to cause the highlighted and selected bookmark item 402 to become fixed at it's current position in bookmark list 400 such that the display position of bookmark item 402 is static when other bookmark items are added or removed from bookmark list 400.

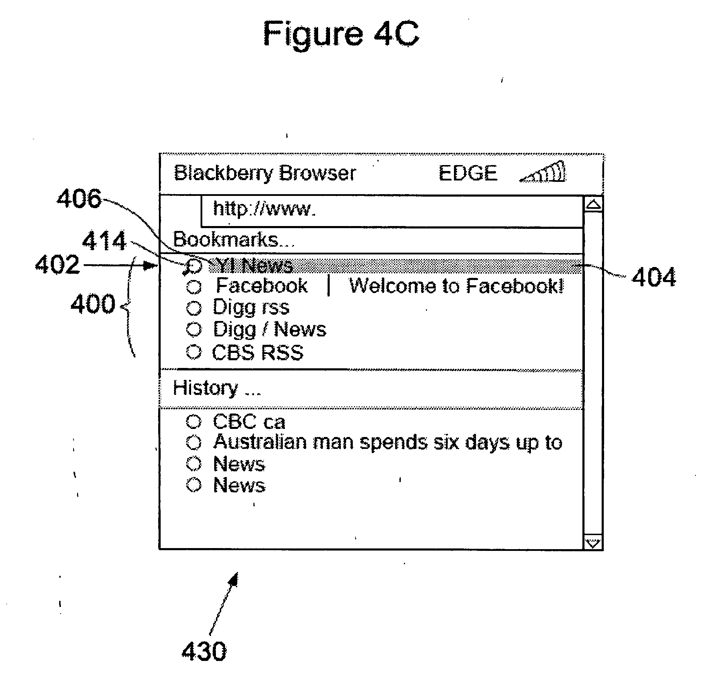

Figure 4C illustrates menu item 402 after the bookmark item 402 is fixed at its current position in bookmark list 400 as discussed above with Figure 4B. Bookmark item 402 is identified on the display screen 430 as fixed in position as identified by the presence of a pinned icon 414 proximate to and associated with title/text portion 406 of bookmark item 402.

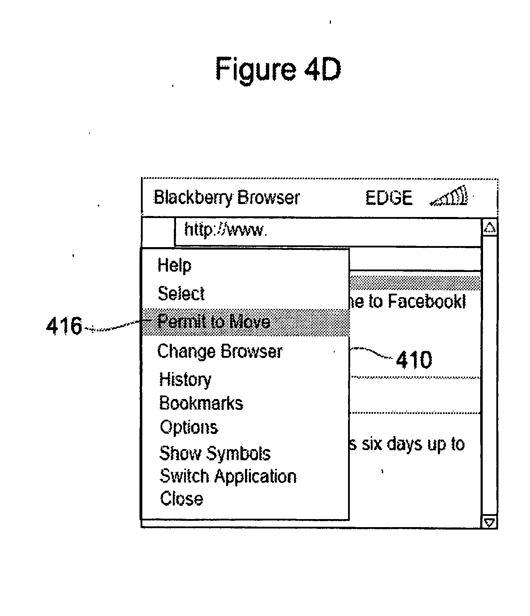

In an exemplary embodiment, a bookmark which has been previously fixed in position in bookmark list 400 may be unfixed by first selecting the bookmark item, such as bookmark item 402, as discussed with Figure 4A, redisplaying the browser menu 410, then selecting the "Permit to move" menu item 416 (Figure 4D). When the bookmark item 402 is returned to the unfixed state it is permitted to move and may shift or be repositioned in bookmark list when bookmark items are added or removed from bookmark list 400. When bookmark item 402 is unfixed, it loses the pinned icon 414 (Figure 4C) and may instead display its previous unfixed icon such as icon 408 (Figure 4A).

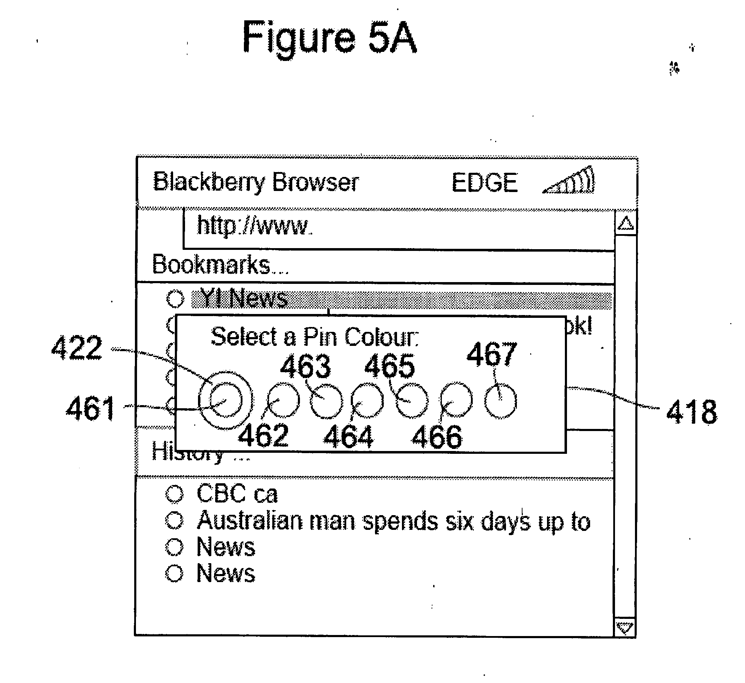

Figures 5A through 5C illustrate a modification to and extension of the implementation of the system and method presented and discussed with Figures 4A through 4D above. Figures 5A through 5C present a series of display screen images illustrating a system and method of user selectable color coding of pinned icons associated with bookmark items which have previously been fixed into position. While color coding is used, other indicia are also contemplated including shading or animations. The individual color coding of pinned icons is usable to identify related positionally fixed items for positional sorting, such as to group two or more bookmark items together on the display. The bookmark item 402 (Figure 4A) is first selected, the browser menu 410 (Figure 4B) is displayed and the "Do Not Move" menu item 412 is selected on the menu 410 as discussed above with Figures 4A and 4B. Then cursor tool tip color select menu 418 is displayed selection of a color to be used for rendering at least a portion of the pinned icon from a palette of color selection items (461, 462, 463, 464, 465, 466, 467) in the example tool tip color select menu 418. As illustrated in Figure 5A, the leftmost color item (red color item 461) is currently selected. The selection of color item 461 is identified by the halo or "glow" 422 surrounding the color item 461. Other methods may be utilized to identify that the red color item 461 is currently selected, such as by surrounding the red color item 461 with 4 lines in the form of a rectangle, or by other methods as are known to those skilled in the art. After the pinned color is selected in the tool tip menu 418, the pinned icon (for example, a pin icon such as 414 Figure 4C) is rendered on the display using the selected color item 461 selected in the tool tip color select menu 418 as illustrated in Figure 5A.

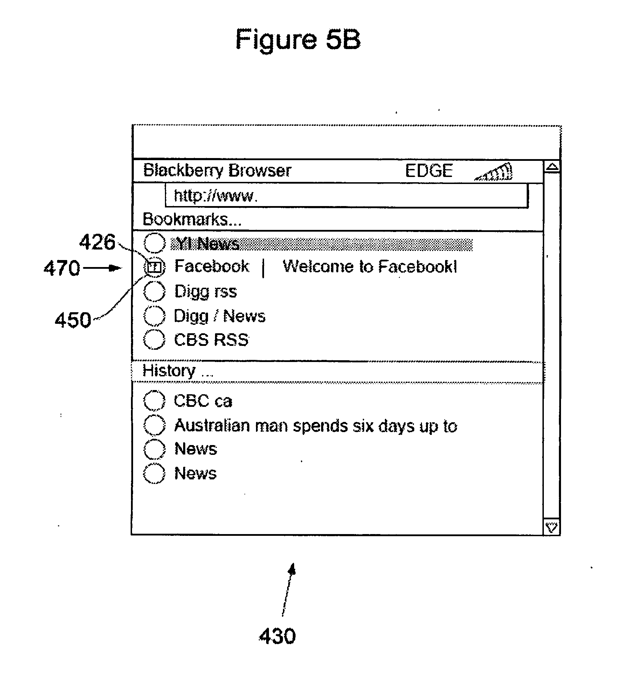

Continuing the discussion of Figure 5B, in another aspect of the invention, pinned icons associated with bookmark items having fixed display positions may also be logos or icons such as web page icon 426. The icon 426 is typically an icon linked to or identified in the web page to which the bookmark item is a shortcut link. Icon 426 may be identified on the display screen of the device as a pinned icon by the presence of a contrasting or lighter color "glow" 450 surrounding the icon 426 identifying the icon 426 as a pinned icon and bookmark item 470 as being positionally fixed.

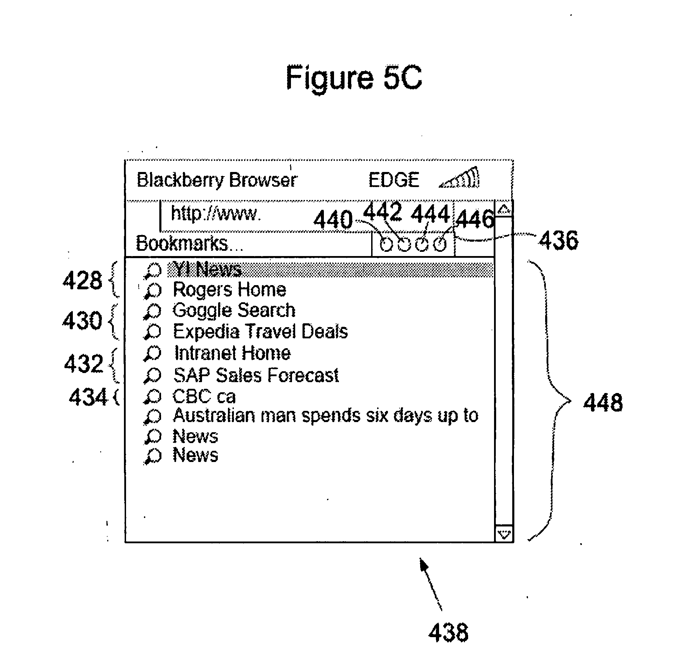

Figure 5C illustrates another aspect of the invention wherein bookmark items having fixed display positions may be sorted according to the color of the associated pinned icons. The web browser bookmarks screen 438 includes a sort order menu 436. Sort order menu 436 has a plurality of uniquely colored icons 440, 442, 444, and 446. The order of the colors of the ordered color icons 440, 442, 444 and 446 in the sort order menu 436 determines the order in which similarly colored pinned icons and their associated bookmarks are sorted in bookmark list 448. After sorting, bookmark group 428 has pinned icon colors matching the color of ordered color icon 440. Bookmark group 430 has pinned icon colors matching the color of ordered color icon 442. Bookmark group 430 has pinned icon colors matching the color of ordered color icon 442. Bookmark group 430 has pinned icon colors matching the color of ordered color icon 442. The order in which colored pinned bookmarks are sorted for display is changeable by changing the colors of the ordered color icons 440, 442, 444 and 446 in the sort order menu 436. The colors of ordered color icons 440, 442, 444 and 446 and hence the sort order is changeable by the user.

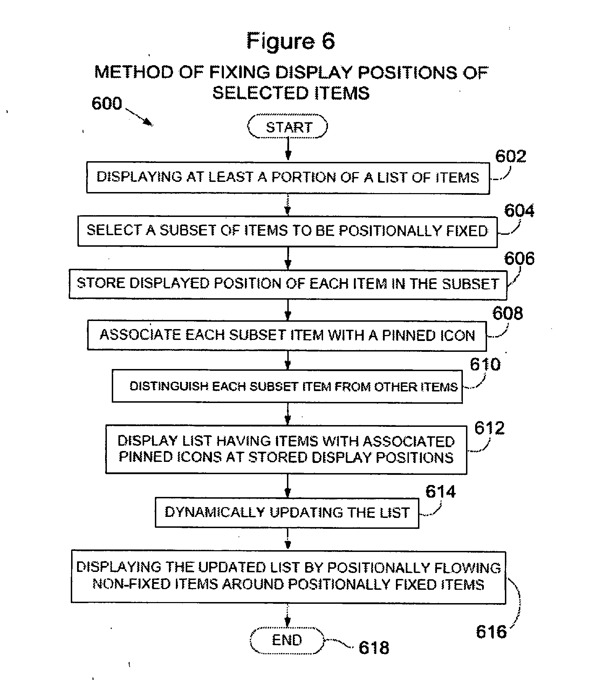

Figure 6 is a flowchart illustrating a method of fixing the displayed position of selected items. Block 602 comprises displaying at least a portion of a list having at least one non-fixed item on the display screen 12 (Figure 1) of a hand-held computing device, such as device 10 (Figure 1). Then at block 604 a subset of items to be positionally fixed is selected from the list. One or more items may be selected at a time to be positonally fixed. The subset items may be selected through the operation of positioning device 14 as discussed earlier with Figure 3 or by any other means that would be known to one skilled in the art. At block 606 the displayed position of each subset item is stored to memory. Depending upon the embodiment, the displayed position may either be the subset item's position in the list (for example, the sequential item number in the list relative to either the top or bottom of the list) or may be the screen display coordinates at which the subset item is displayed on the screen, depending upon the embodiment. The method continues at block 608 by associating each subset item with a pinned icon and distinguishing each subset item from the other items in the list at block 610. For example, the pinned icon can be an icon adapted to visually distinguish positionally fixed items from non-fixed items on the display of the hand-held electronic device.

One example of a pinned icon adapted to visually identify the item as fixed is an icon with a "glow" surrounding it as discussed earlier with Figure 5A. Another example is an icon representation of a pin or push-pin, one example of such a push-pin is illustrated in Figure 4C label 414. Other pinned icon representations that are suitable to distinguish postionally fixed items from non-fixed items may be used without deviating from the intention of the present disclosure and invention.

Distinguishing each subset item from the items in the list may be done for example by choosing a color to render at least a portion of the pinned icon. The color may be chosen through use of the positioning device 14 and tool tip menu as discussed with Figures 5A through 5C above, or may be chosen by selecting a color on a displayed drop-down menu, or may be chosen by any other suitable method as would be known to one skilled in the art. Block 612 comprises displaying the list with positionally fixed items and associated pinned icons displayed at their stored display positions. Other non-fixed items in the list positionally flow around the positionally fixed items. At block 614 the list may be dynamically updated by the addition or removal of items from the list. The dynamic update may be the result of adding or removing bookmarks from the list through the web browser application, or as the result of a user adding or deleting contacts in a contacts list, or adding or removing items from any other type of displayable list that may be available on the hand-held electronic device. Block 616 comprises displaying the updated list while positionally flowing non-fixed list items around positionally fixed list items such that the positionally fixed items remain in their stored displayed positions. The method ends at block 618.

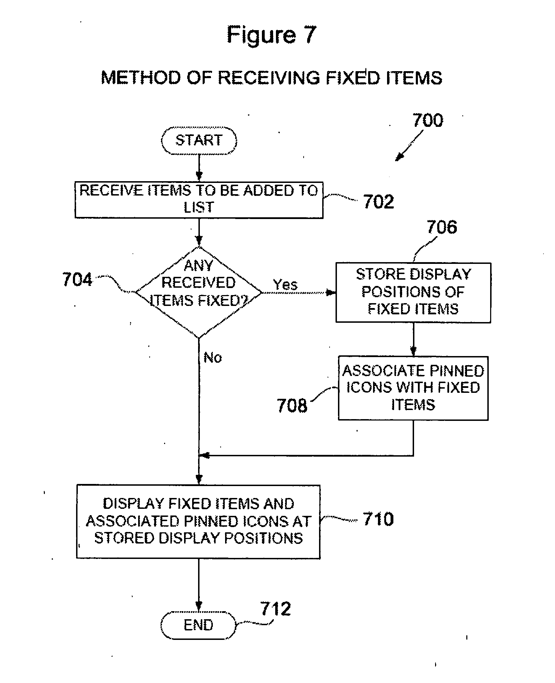

Figure 7 is a flow chart illustrating a method of receiving fixed items to be added to a list in a data transmission to the wireless device. Block 702 comprises receiving items to be added to a list in a data transmission to the hand-held electronic device. These items may be received over-the air via wireless communication with a mobile network such as a cellular network or may be received through other means, one example being through a wired connection such as a serial cable between the hand-held device and a computer workstation. At block 704 a test is performed to determine if any of the received items are identified in the data transmission as positionally fixed items. If the received items contain positionally fixed items, then control branches to block 706. If no positionally fixed items were received in the transmission, then control transfers to block 710. The data transmission containing positionally fixed items may also contain display positions for the fixed items and optionally a color selection in which to render at least a portion of the pinned icon. Optionally, the data transmission may contain custom icons to be used instead of the pinned icon for each fixed item.

If positionally fixed items were received and detected at block 704, then at block 706 the intended display position of each received positionally fixed item is then stored to memory. The intended display position may be a position in the list or screen coordinates, as discussed earlier with Figure 6. At block 708 pinned icons are associated with each received positionally fixed item. By associated herein we mean the pinned icon is related to the positionally fixed item to display proximate to and together with the positionally fixed item. The relationship between each pinned icon and its associated positonally fixed item is a one to one relationship. As discussed earlier, the pinned icon is an icon visually adapted to visually distinguish fixed items from non-fixed items on the display of the hand-held electronic device. One example of a pinned icon adapted to visually identify the item as pinned is an icon with a "glow" surrounding it as discussed earlier with Figure 5A. Another example is an icon representation of a pin or push-pin, one example of such a push-pin illustrated in Figure 4C label 414. Other pinned icon representations may be used without deviating from the intention of the present disclosure and invention. Control then transfers to block 710.

At block 710 the updated list is displayed on the display screen with the positionally fixed items and their associated pinned icons at their stored displayed positions. Non-fixed items then are positioned around or flow around the positionally fixed items. The method ends at block 712.

The discussion is now directed to Figures 8A through 8C. Figures 8A through 8C are a series of screen images depicting a message list screen 800 having a message list 812 as displayed on a hand-held electronic device by a message client application such as an email client application 274 (Figure 2B). In particular, Figure 8A is a screen image of a prior art message client application executing and displaying on a hand-held electronic device. In Figure 8A, icon 802 is indicative of a new, currently unread (unopened) email message. Icon 804 is indicative of a draft email message, perhaps a partially drafted email message that has yet to be sent. Icon 806 is indicative of an email message previously composed and sent on the hand-held device. Icon 808 is indicative of a received email message that has been read (opened) previously, as indicated by the open envelope icon. It is to be understood that the illustrated appearance of icons 802, 804, 806 and 808 are for one embodiment of the invention disclosed herein and may have different icon images in other embodiments of the invention disclosed herein. All messages, irrespective of message type, as displayed together in message list 812 may be displayed as sorted or ordered by some criteria such as message time/date. In the prior art, draft email message 804 is displayed with other received or sent email messages in the same list. As new email messages are received, the location of draft message 804 is shifted downwards on the displayed message list 812 together with other displayed messages so as to permit the newly received email message or messages to be displayed at the top of the email list (sorted by time/date). Eventually, as new messages are received, the draft message 804 will be displaced from the displayed message list screen 812 and will no longer be readily available to the user to open, to edit and send. Additionally, since draft email messages 804 are intermingled with other received emails 802, 808, it becomes increasingly difficult to locate draft emails among all others messages in the message list 812 as new email messages are received.

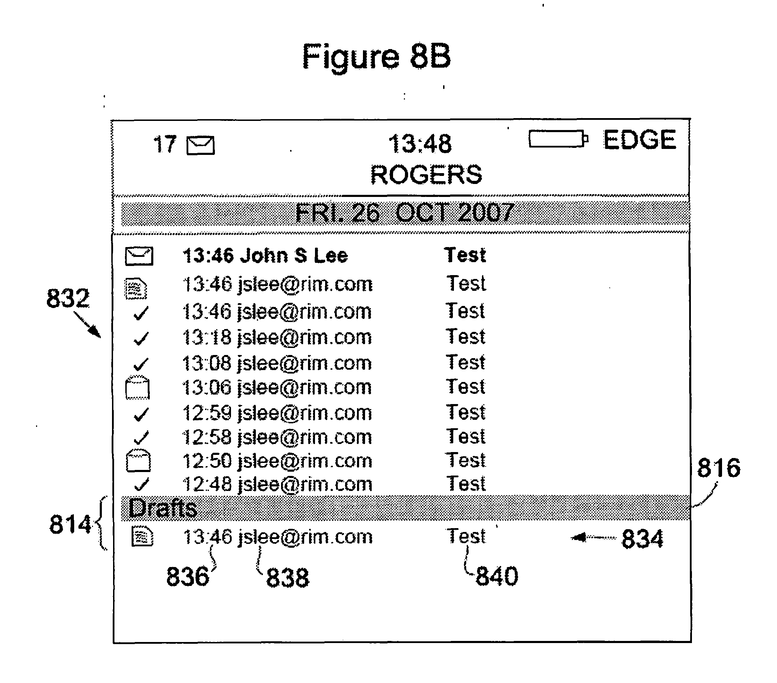

Figure 8B depicts a screen image of a message list 832 incorporating certain features. Message list 832 now includes a draft messages portion 814 to segregate draft messages (such as draft message 834) from other messages in message list 832. The draft messages portion 814 is shown with a single draft message 834. Draft message 834 as displayed in the message list 832, includes text fields for the time 836 (or optionally time/date or just date), an identifier of the sender 838 (such as the email address or contact name of the sender), and the message title 840 which are collectively referred to herein as the message identifier. Segregation of draft messages from other messages prevents draft messages from scrolling off the screen as new email messages are received and added to the message list 832.

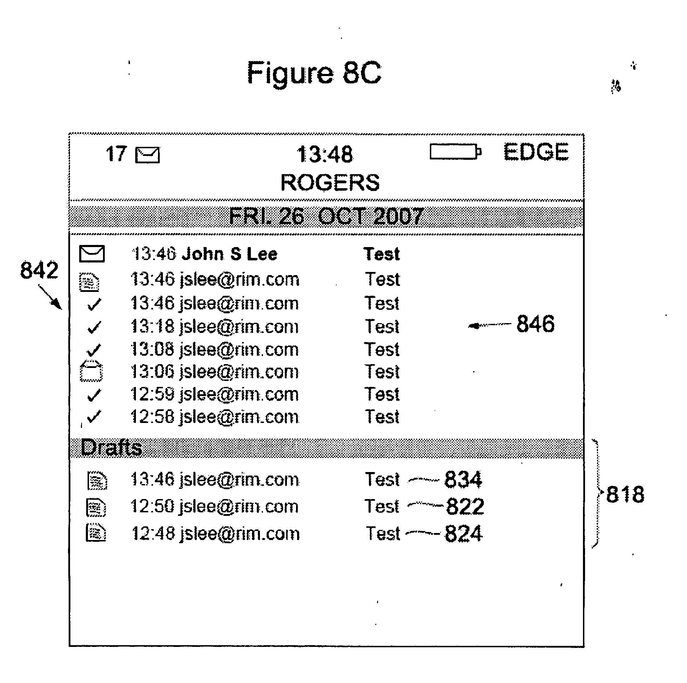

Figure 8C depicts the message list 842 with a draft messages portion 818. Draft messages portion 818 of Figure 8C now has three unsent draft email messages, specifically 834, as well as previously drafted messages 822 and 824. The presence of two additional draft email messages 822 and 824 in Figure 8C caused the size of draft message portion 818 to expand relative to draft message portion 814 in Figure 8B so that all draft email messages remain displayed on the screen independent of message updates and resultant scrolling of message list 812. Draft email messages in draft message portion 818 are segregated from other email messages 846 and are positionally fixed at the bottom of the screen for quick access by the user.

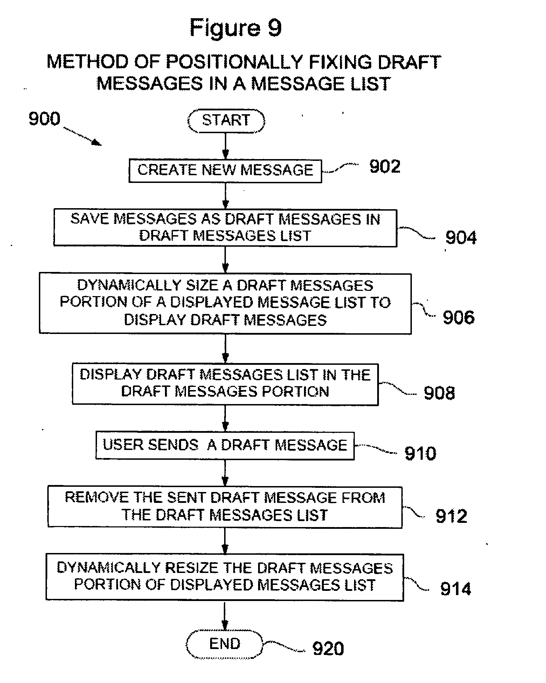

Figure 9 is a flow chart illustrating a method of positionally fixing draft email messages for easy access on the display of a hand-held electronic device. Bock 902 comprises creating a new draft message having a message identifier using the message client of the hand-held electronic device. At block 904 the new message is saved to the draft message list in the hand-held device to be completed or sent at a later time. At block 906 the draft messages portion of a displayed message list is dynamically sized to accommodate displaying all draft message identifiers including the new draft message identifier. Then at block 908 the draft message identifiers are displayed in the draft messages portion of the displayed messages list. Eventually, at block 910, the new draft message is completed if necessary and sent to the intended recipient. At block 912 the new draft message is removed from the draft messages list. At block 914 the draft messages portion is dynamically resized (reduced in size) to recover display space used by the now sent draft message. The method ends at block 920.

In another aspect of the invention, fixed bookmark items with color coded pinned icons can be pushed to a hand-held computing device via an over-the-air radio frequency data transmission (ex: through a cellular service provider 290 of Figure 2A). For example, an enterprise may push web browser bookmark items to a hand-held computing device to fix web bookmarks for important corporate Internet and Intranet sites into defined positions of the bookmark list of the web browser.

While the detailed description above together with the related figures teach positionally fixing displayed items in web browser and email applications, it is to be understood that the inventive concepts disclosed herein are not limited to use with web browser bookmarks and email lists, but instead are equally applicable for use with any data application to separate a dynamic list of items (e.g., bookmarks, emails) from a static list of items (e.g., drafts). For example, such applications may include managing instant messaging contacts and current conversations, lists of voicemails and saved voice mails, lists of memos and lists of "To Do" action items.

In the preceding detailed description, reference has been made to the accompanying drawings that form a part hereof and in which are shown by way of illustration specific embodiments in which the invention may be practiced. These embodiments and certain variants thereof have been described in sufficient detail to enable those skilled in the art to practice the invention. It is to be understood that other suitable embodiments may be utilized and that logical, electrical, software, material, and mechanical changes may be made without departing from the scope of the invention. To avoid unnecessary detail, the description omits certain information known to those skilled in the art.

Certain advantages will now be explained. Since hand-held computing devices typically provide a relatively small display screen having a limited screen size and resolution, the foregoing can provide relatively quick and efficient access to important items in a lengthy list on such a hand-held computing device. The teachings herein optimize the control of the memory and the display of the computing device so as to fix various portions of the screen and thereby reduce the cumbersome use of key-boarding, trackball manipulation, or trackwheel manipulation or the like. This contrasts with certain prior art mobile applications implementations on hand-held computing devices, which display long lists across a large number of screens, in a manner that that can be cumbersome to scroll through or to search. In these prior art configurations, important items which were once accessible may be moved further down the list or off the display as the list grows with the addition of new items.

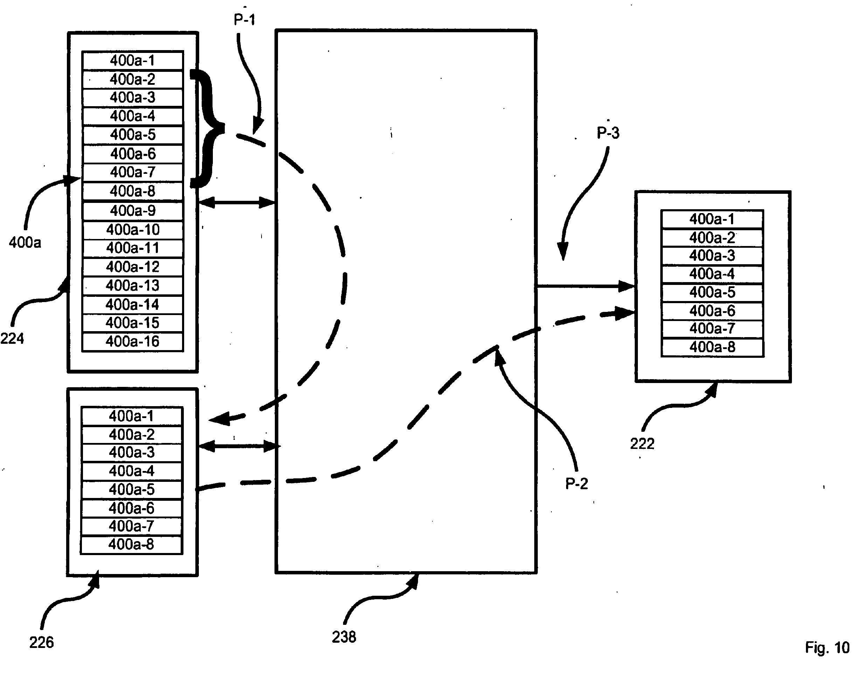

Indeed, scrolling back and forth between areas of a long list can be resource intensive, (e.g. consuming significant amounts of processor and memory resources) and can lead to the device to freeze, or even crash, as repetitive scrolling back and forth throughout a long list is effected. The teachings herein can obviate or mitigate such intense resource use as the foregoing functional teachings are effected through either hardware or software configuration of the various components of device 202. Figure 10 provides an exemplary illustration of how such processing resources are used in a less intensive manner.

Figure 10 shows non-volatile storage 224 and volatile storage 226, microprocessor 238 and display 222 from Figure 2 in isolation. Non-volatile storage 224 in Figure 10 maintains a list 400a which is a variation on list 400 discussed above. List 400a comprises sixteen exemplary items, denoted as 400a-1, 400a-2, 400a-3 ... 400a-16. List 400a as shown in within non-volatile storage 224 represents that memory structures within non-volatile storage 224 are configured so as to maintain a representation of list 400a.

In Figure 10, processor 238 is shown performing a first processing operation P-1 whereby list items 400a-1, 400a-2 .. 400a-8 are loaded into volatile storage 226. Figure 10 also shows processor 238 performing a second processing operation P-2 whereby list items 400a-1, 400a-2 .. 400a-8 are loaded from volatile storage 226 into processor 238, and whereby processor 238 controls display 222 so as to generate list items 400a-1, 400a-2 .. 400a-8 on display 222.

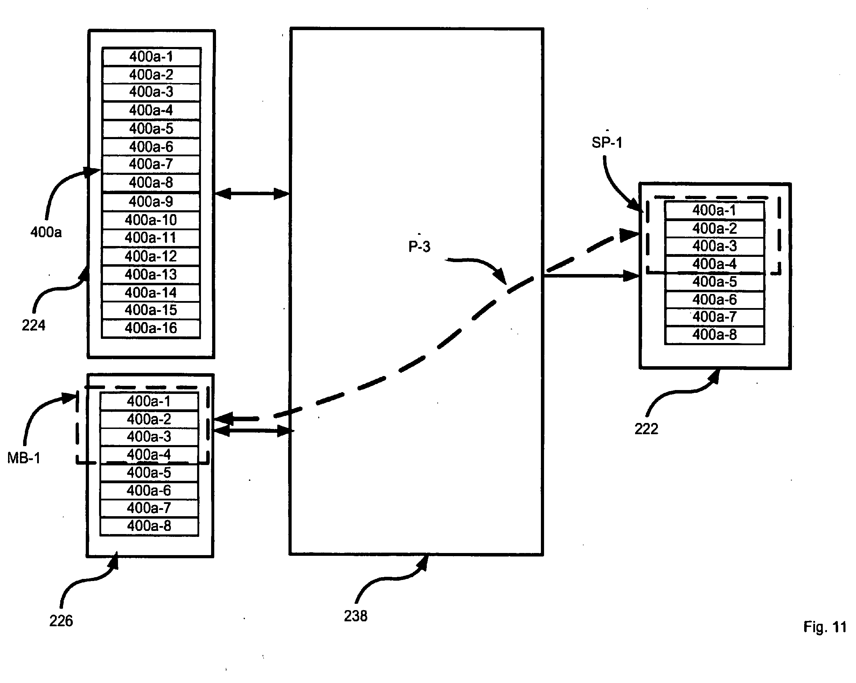

In Figure 11, which is a continuation of the example in Figure 10, processor 238 is shown performing a third processing operation P-3 whereby list items 400a-1, 400a-2 .. 400a-4 have been selected have been fixed in position on display 222 using the teachings herein (e.g. the discussion above in relation to Figure 4A, 4B, 4C, or method 600 of Figure 6). As part of processing operation P-3, memory block MB-1 (corresponding to fixed list items 400a-1, 400a-2 .. 400a-4) of volatile storage 226 is also fixed, such that processor 238 can continue to generate screen portion SP-1 relying on memory block MB-1 being fixed. Thus processor 238 is relieved from updating memory block MB-1 and screen portion SP-1 while list items 400a-1, 400a-2 .. 400a-4 are selected as being fixed using the teachings herein. In this manner, processing burdens on processor 238 can be reduced. Furthermore, burden on volatile storage 226 can also be reduced by freezing the ongoing management of memory block MB-1 while list items 400a-1, 400a-2 .. 400a-4 are selected as being fixed.

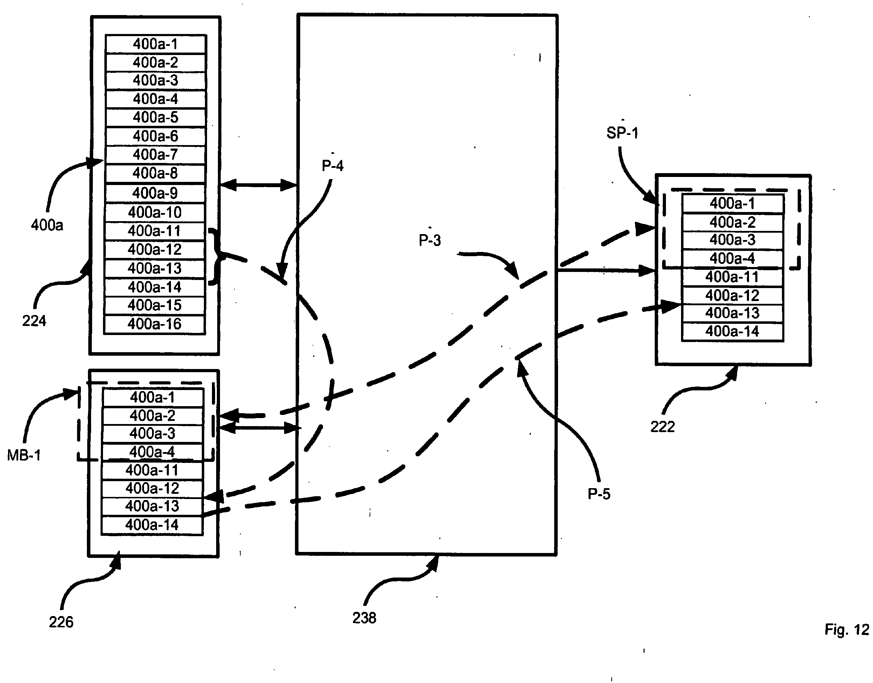

This point is further illustrated in Figure 12, which is a continuation of the example shown in Figure 11, wherein processor 238 is shown performing a fourth processing operation P-4 whereby list items 400a-11, 400a-12 .. 400a-14 are shown as being loaded from non-volatile storage 224 into a portion of volatile storage 226 that is not being occupied by memory block MB-1. Figure 12 also shows processor 238 performing a fifth processing operation P-5 whereby list items 400a-11, 400a-12 .. 400a-14 are loaded from volatile storage 226 into processor 238, and whereby processor 238 controls display 222 so as to generate list items 400a-11, 400a-12 .. 400a-4 on display 222 on a portion of display 222 that is not being occupied by screen portion SP-1. Processing operation P-3, processing operation P-4 and processing operation P-5 in Figure 12 reflect exemplary implementation of block 616 from method 600. Again, note that such use of method 600 can reduce ultimate processing burden on processor 238 and volatile memory 226. Such processing burden is further reduced in scenario where constant scrolling of the entirety of list 400a on display 222 would otherwise be needed (as in the prior art) to generate list items 400a-1, 400a-2 .. 400a-4 at the same time as list items 400a-11, 400a-12 .. 400a-14, such scrolling back and forth requiring constant loading and unloading of volatile storage 226 and accessing operations on non-volatile storage 224, as well as more complex processing updates to display 222.

The preceding detailed description isnot intended to be limited to the specific forms set forth herein, but on the contrary, it is intended to cover such alternatives, modifications, and equivalents. For example, while Figure 2 and Figure 10 shows specific configurations of hardware, it should be understood that alternative configurations of hardware are contemplated. For example, volatile storage 226 can be effected as a plurality of volatile storage areas, (which can be implemented as "caches") with certain volatile storage areas associated directly with processor 238, and other associated with display 222, or other components of device 202. As another example, processor 238 can be implemented as a plurality of processors 238, which may perform a centralized processing functions, or decentralized processing functions corresponding to various components. Indeed, display 222 in and of itself can include its own display unit that comprises its own processor and storage. The foregoing teachings can likewise be extended to such alternative configurations and still provide advantages.

The scope of the monopoly is defined by the appended claims.

## Claims

1. A computer-implemented method controlling hardware components of a hand-held computing device (10) for fixing a displayed position of selected email message identifiers on a display screen (12) of said hand-held computing device (10), comprising:
maintaining a list of email message identifiers in a storage of said computing device (10);
displaying, on said display screen (12), a plurality of email message identifiers from said list;
selecting, via an input mechanism of said computing device (10), a subset of said plurality of email message identifiers to be positionally fixed;
associating said each email message identifier in said subset with a pinned icon, said pinned icon distinguishing said each email message identifier in said subset from other email message identifiers from said plurality of email message identifiers;
storing a displayed position of each email message identifier in said subset; and
displaying said each email message identifiers in said subset and its associated pinned icon at its stored display position;
wherein non-fixed email message identifiers from said plurality of email message identifiers positionally flow around said each email message identifier in said subset and said each email message identifier in said subset remain in its stored display position.

2. The method of claim 1 wherein said stored display position is indicative of a position on said display screen (12) of said device (10).

3. The method of claim 1 or claim 2, further comprising:
receiving email message identifiers to be added to said list in at least one over-the-air transmission;
adding said received email message identifiers to said list; and
selecting a second subset of email message identifiers from said list, wherein said second subset is identified in said over-the-air transmission.

4. The method of any one of claims 1 to 3, further comprising scrolling said list such that additional portions of said list are viewable while maintaining said each email message identifier in said subset at its stored display position.

5. The method of any one of the preceding claims wherein said list is a dynamically updatable list configured such that email message identifiers are dynamically added, deleted or reordered in said list.

6. The method of any one of the preceding claims, further comprising positionally sorting said subset of email message identifiers such that said subset of email message identifiers are repositioned to positionally display together as at least one group.

7. The method of any one of the preceding claim wherein associating said each email message identifier in said subset of email message identifiers with a pinned icon comprises choosing a color to render at least a portion of said pinned icon.

8. The method of claim 7 wherein choosing a color to render at least a portion of said pinned icon, said color is selected from a plurality of colors displayed in a cursor tool tip on said display screen.

9. The method of claim 7 or claim 8, further comprising positionally sorting each said email message identifier in said subset of email message identifiers according to said chosen colors of said pinned icons such that pinned icons sharing the same chosen color positionally display together in a group on said display screen (12).

10. A hand-held computing device (10), comprising:
a display configured to display email message identifier in a list; and
a processor configured to perform the steps of the method of any one of claims 1 to 9.

## Patentansprüche

1. Computerimplementiertes Verfahren zum Steuern von Hardware-Komponenten einer handgehaltenen Computervorrichtung (10) zur Festlegung einer angezeigten Position von ausgewählten Email-Nachricht-Identifizierern auf einem Anzeigebildschirm (12) der handgehaltenen Computervorrichtung (10), das aufweist:
Führen einer Liste von Email-Nachricht-Identifizierern in einem Speicher der Computervorrichtung (10);
Anzeigen, auf dem Anzeigebildschirm (12), einer Vielzahl von Email-Nachricht-Identifizierern aus der Liste;
Auswählen, über einen Eingabemechanismus der Computervorrichtung (10), eines Teilsatzes der Vielzahl von Email-Nachricht-Identifizierern, die positionsmäßig festzulegen sind;
Assoziieren jedes Email-Nachricht-Identifizierers in dem Teilsatz mit einem Fixierungssymbol, wobei das Fixierungssymbol jeden Email-Nachricht-Identifizierer in dem Teilsatz von anderen Email-Nachricht-Identifizierern aus der Vielzahl von Email-Nachricht-Identifizierern unterscheidet;
Speichern einer angezeigten Position jedes Email-Nachricht-Identifizierers in dem Teilsatz; und
Anzeigen jedes Email-Nachricht-Identifizierers in dem Teilsatz und seines assoziierten Fixierungssymbols an seiner gespeicherten Anzeigeposition;
wobei nicht-festgelegte Email-Nachricht-Identifizierer aus der Vielzahl von Email-Nachricht-Identifizierern positionsmäßig um jeden Email-Nachricht-Identifizierer in dem Teilsatz herum fließen und jeder Email-Nachricht-Identifizierer in dem Teilsatz an seiner gespeicherten Anzeigeposition bleibt.

2. Verfahren gemäß Anspruch 1, wobei die gespeicherte Anzeigeposition eine Position auf dem Anzeigebildschirm (12) der Vorrichtung (10) angibt.

3. Verfahren gemäß Anspruch 1 oder Anspruch 2, das weiter aufweist:
Empfangen von Email-Nachricht-Identifizierern zum Hinzufügen zu der Liste in zumindest einer Über-die Luft-Übertragung;
Hinzufügen des empfangenen Email-Nachricht-Identifizierers zu der Liste; und
Auswählen eines zweiten Teilsatzes der Email-Nachricht-Identifizierer aus der Liste, wobei der zweite Teilsatz in der über-die Luft-Übertragung identifiziert wird.

4. Verfahren gemäß einem der Ansprüche 1 bis 3, das weiter aufweist Scrollen durch die Liste derart, dass zusätzliche Teile der Liste betrachtet werden können, während jeder Email-Nachricht-Identifizierer in dem Teilsatz an seiner gespeicherten Anzeigeposition gehalten wird.

5. Verfahren gemäß einem der vorhergehenden Ansprüche, wobei die Liste eine dynamisch aktualisierbare Liste ist, die derart konfiguriert ist, dass Email-Nachricht-Identifizierer dynamisch hinzugefügt, gelöscht oder neugeordnet werden in der Liste.

6. Verfahren gemäß einem der vorhergehenden Ansprüche, das weiter aufweist ein positionsmäßiges Sortieren des Teilsatzes von Email-Nachricht-Identifizierern derart, dass der Teilsatz von Email-Nachricht-Identifizierern neu positioniert wird zur positionsmäßigen Anzeige zusammen als zumindest eine Gruppe.

7. Verfahren gemäß einem der vorhergehenden Ansprüche, wobei ein Assoziieren jedes Email-Nachricht-Identifizierers in dem Teilsatz von Email-Nachricht-Identifizierern mit einem Fixierungssymbol ein Auswählen einer Farbe aufweist, um zumindest einen Teil des Fixierungssymbols darzustellen.

8. Verfahren gemäß Anspruch 7, wobei bei einem Auswählen einer Farbe, um zumindest einen Teil des Fixierungssymbols darzustellen, die Farbe ausgewählt wird aus einer Vielzahl von Farben, die in einem Cursor-Tooltip auf dem Anzeigebildschirm angezeigt werden.

9. Verfahren gemäß Anspruch 7 oder Anspruch 8, das weiter aufweist ein positionsmäßiges Sortieren jedes Email-Nachricht-Identifizierers in dem Teilsatz von Email-Nachricht-Identifizierern gemäß den ausgewählten Farben der Fixierungssymbole derart, dass Fixierungssymbole mit derselben ausgewählten Farbe positionsmäßig zusammen in einer Gruppe auf dem Anzeigebildschirm (12) angezeigt werden.

10. Handgehaltene Computervorrichtung (10), die aufweist:
eine Anzeige, die konfiguriert ist zum Anzeigen von Email-Nachricht-Identifizierern in einer Liste; und
einen Prozessor, der konfiguriert ist zum Durchführen der Schritte des Verfahrens gemäß einem der Ansprüche 1 bis 9.

## Revendications

1. Procédé mis en oeuvre sur ordinateur commandant des composants matériels d'un dispositif informatique portable (10) pour fixer une position d'affichage d'identifiants de messages de courrier électronique sélectionnés sur un écran d'affichage (12) dudit dispositif informatique portable (10), consistant à :
maintenir à jour une liste d'identifiants de messages de courrier électronique dans une unité de stockage dudit dispositif informatique (10) ;
afficher, sur ledit écran d'affichage (12), une pluralité d'identifiants de messages de courrier électronique provenant de ladite liste ;
sélectionner, au moyen d'un mécanisme d'entrée dudit dispositif informatique (10), un sous-ensemble de ladite pluralité d'identifiants de messages de courrier électronique afin d'en fixer la position ;
associer chacun desdits identifiants de messages de courrier électronique dudit sous-ensemble au moyen d'une icône fixée, ladite icône fixée distinguant chacun desdits identifiants de messages de courrier électronique dudit sous-ensemble d'autres identifiants de messages de courrier électronique de ladite pluralité d'identifiants de messages de courrier électronique ;
stocker une position d'affichage de chaque identifiant de message de courrier électronique dudit sous-ensemble ; et
afficher chacun desdits identifiants de messages de courrier électronique dudit sous-ensemble et l'icône fixée qui lui est associée à sa position d'affichage stockée ;
dans lequel des identifiants de messages de courrier électronique non fixes provenant de ladite pluralité d'identifiants de messages de courrier électronique ont une position circulant autour de chacun desdits identifiants de messages de courrier électronique dudit sous-ensemble et chacun desdits identifiants de messages de courrier électronique dudit sous-ensemble reste à sa position d'affichage stockée.

2. Procédé selon la revendication 1, dans lequel ladite position d'affichage stockée est représentative d'une position sur ledit écran d'affichage (12) dudit dispositif (10).

3. Procédé selon la revendication 1 ou 2, consistant en outre à :
recevoir des identifiants de messages de courrier électronique devant être ajoutés à ladite liste lors d'au moins une transmission radio ;
ajouter lesdits identifiants de messages de courrier électronique à ladite liste : et
sélectionner un second sous-ensemble d'identifiants de messages de courrier électronique dans ladite liste, ledit second sous-ensemble étant identifié lors de ladite transmission radio.

4. Procédé selon l'une quelconque des revendications 1 à 3, consistant en outre à faire défiler ladite liste de façon que des parties supplémentaires de ladite liste puissent être vues tout en maintenant chacun desdits identifiants de messages de courrier électronique dudit sous-ensemble à sa position d'affichage stockée.

5. Procédé selon l'une quelconque des revendications précédentes, dans lequel ladite liste est une liste pouvant être mise à jour dynamiquement configurée de façon que des identifiants de messages de courrier électronique soient ajoutés, effacés ou réordonnés dynamiquement dans ladite liste.

6. Procédé selon l'une quelconque des revendications précédentes, consistant en outre à trier en fonction de la position ledit sous-ensemble d'identifiants de messages de courrier électronique de façon que ledit sous-ensemble d'identifiants de messages de courrier électronique soit repositionné afin de les afficher ensemble de manière positionnée sous la forme d'au moins un groupe.

7. Procédé selon l'une quelconque des revendications précédentes, dans lequel l'association de chacun desdits identifiants de messages de courrier électronique dudit sous-ensemble d'identifiants de messages de courrier électronique au moyen d'une icône fixée consiste à choisir une couleur pour restituer au moins une partie de ladite icône fixée.

8. Procédé selon la revendication 7, dans lequel le choix d'une couleur pour restituer au moins une partie de ladite icône fixée consiste à sélectionner ladite couleur parmi une pluralité de couleurs affichées dans une infobulle d'outil de curseur sur ledit écran d'affichage.

9. Procédé selon la revendication 7 ou la revendication 8, consistant en outre à trier en fonction de la position chacun desdits identifiants de messages de courrier électronique dudit sous-ensemble d'identifiants de messages de courrier électronique conformément auxdites couleurs choisies desdits icônes fixées de façon que des icônes fixées partageant la même couleur choisie s'affichent ensemble à une position fixe dans un groupe sur ledit écran d'affichage (12).

10. Dispositif informatique portable (10), comprenant :
un afficheur configuré pour afficher des identifiants de messages de courrier électronique dans une liste ; et
un processeur configuré pour exécuter les étapes du procédé selon l'une quelconque des revendications 1 à 9.
